# EUROPEAN PATENT SPECIFICATION

(11) **EP 1 645 398 B1**
(45) Date of publication and mention of the grant of the patent: **09.04.2008**
(21) Application number: 04381042.3
(22) Date of filing: 07.10.2004
(51) Int. Cl.: B29C 51/16, B29C 51/46, B29C 51/26, B29C 45/14, B60R 13/02

(54) **Installation for manufacturing plastic pieces with a coating and the procedure for manufacturing them**
Einrichtung und Verfahren zur Herstellung von Kunststoffteilen mit einer Beschichtung
Installation et procédé pour la fabrication de pièces en matière plastique revêtues

(43) Date of publication of application: 12.04.2006
(73) Proprietor: GRUPO ANTOLIN-INGENIERIA, S.A., 09007 Burgos (ES)
(72) Inventor: Del Campo Gonzalez, José Ramon, Grupo Antolin-, 09004 Burgos (ES)
(74) Representative: Esteban Perez-Serrano, Maria Isabel

(56) References cited:
- EP-A- 0 348 357
- EP-A- 1 059 156
- FR-A- 2 796 329
- US-A- 4 614 558
- US-A1- 2004 169 396

## Description

### OBJECT OF THE INVENTION

The object of the present invention is both the installation required to manufacture plastic pieces with a coating and the procedure used in this manufacturing process.

In certain manufacturing processes, particularly in the automobile field, there are pieces on which a coating is attached. These coatings usually have means or marks used as a reference to position accurately the coatings on the plastic or support pieces.

The means used in the manufacturing system are characterised by a special configuration and design, so that they allow attaching the coatings to the pieces on which they are fitted with a high accuracy in their exact positioning and orientation, as well as an improved efficiency in the attachment of the two parts of the piece, the substrate and the coating. The greater part of the manufacturing process is automated.

As regards the manufacturing procedure, in addition to producing a perfect positioning and alignment of the references provided on the coating with respect to the plastic piece on which they are positioned, it allows reducing the labour and time employed in their manufacture.

Therefore, the present invention lies in the field of means and/or processes for coating pieces, and specifically among processes performed automatically.

### BACKGROUND OF THE INVENTION

Hitherto for coating pieces or substrates in general a large amount of labour is used, given the numerous factors involved in the correct and accurate positioning of the coating on the piece to be coated, in addition to the time used to attach the two parts manually.

Some of the coatings used have marks or references used by the assemblers to ensure a perfect positioning of the coating on the piece to be coated, providing an aesthetic and/or functional effect.

The attachment process involves a first stage of positioning the coating and the piece, in which the worker determines the correct positioning and any necessary corrections.

The positioning and attachment process for the coating and substrate, as is currently performed, is a labour-intensive process as it involves manual operations. In addition, the time required for this attachment process is very long, so that this activity can be considered to be purely artisanal.

It is known in the state of the art a method and apparatus for making a surface-lined article as the one disclosed in US 4614558, nevertheless it lacks of any positioning and aligning means of a sheet previously to be fixed with regard to a frame.

It is therefore the object of this invention to provide means to allow an automated attachment of a coating containing reference elements or marks and the piece or substrate to be coated, in which in addition the accuracy of the correct positioning of the coating on the substrate is aided by means that determine a correct positioning with respect to each other.

This object is achieved by an installation according to claim 1 and by a procedure according to claim 12.

### DESCRIPTION OF THE INVENTION

The object of the present invention for an installation for manufacturing plastic pieces with a coating, in which the coating is provided with reference elements or marks, consists on the use on one hand of a tool fo positioning and holding a sheet on a frame, and on another hand of a press with means for positioning the sheet on the substrate, in order to form the piece with the sheet, both means working together so that a piece is obtained in an automated manner with a very high precision.

The positioning tool allows to hold and position the sheet in a practical way on the attachment frame. The sheet is the coating cut to a dimension and shape such that it will cover the piece, taking into account the operations required to reverse it, such as a posterior trimming or edging to cover the edges.

This positioning tool consists of a bench with means for an exact positioning of the frame. It is also provided with means for securing the sheet to the frame, by any known manner such as clips, nails, clamps, etc.

Together with this tool are provided reference means, such as a light source that emits a reference, such as a line, to indicate the position in which to place the mark or reference of the sheet with respect to the frame, so that after the sheet is joined to the frame this mark or reference will be in the correct place.

The press used in the forming process has means for positioning the frame.

In addition, one of the platens of the press has means for attaching the sheet to the substrate.

According to the invention, the manufacturing process for plastic pieces with coating comprises the stages defined in claim 12.

The material used as a sheet or coating can be of any nature, in particular leather or imitation leather, the latter of any plastic nature, and in particular of vinyl.

The manufacturing method used can involve thermoforming, so that the sheet is adhered to the substrate by heat and pressure and the assembly repeats the shape of the mold; an alternative forming method can be injection.

### DESCRIPTION OF THE DRAWINGS

To complete the description provided below and in order to aid a better understanding of its characteristics, the present description is accompanied by a set of drawings with figures in which, for purposes of illustration and in a non-limiting manner, the most relevant details of the invention are represented.

Figure 1 shows a representation of a sheet or coating with a reference, specifically a double-sewn seam.

Figure 2 shows the positioning of the sheet on a frame.

Figures 3 to 7 show the successive stages by which a correct positioning and subsequent attachment of the sheet on the frame are achieved, distinguishing the structural characteristics of the tool used for this process.

Figures 8 to 11 show the successive stages by which the sheet is formed on the substrate by a thermoforming process, the final assembly adopting the shape of a mold, all of this according to an exact positioning of a reference element disposed on the sheet so that it is at a position, or precisely aligned, respect to a substrate. These figures show the component elements of the press object of the invention.

### PREFERRED EMBODIMENT OF THE INVENTION

A preferred embodiment of the invention disclosed is provided below with reference to the figures.

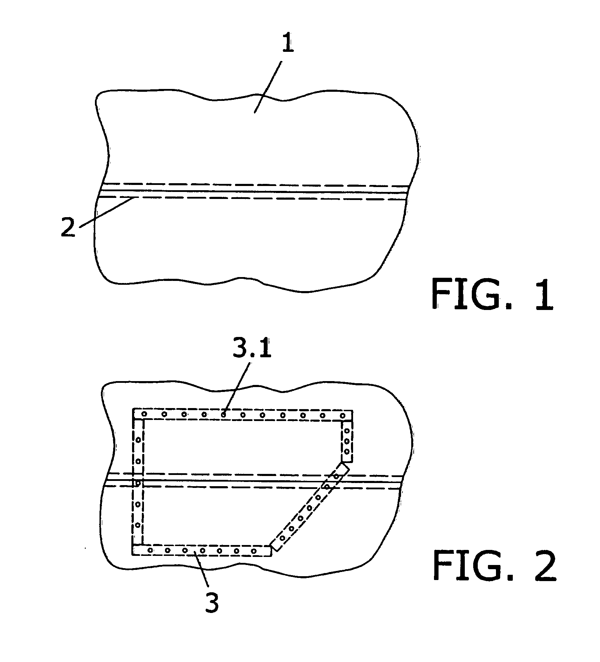

Figure 1 shows a sheet (1) or coating on which is disposed a double-sewn seam (2) used as a reference, intended for a correct positioning and alignment with respect to a substrate on which it is formed.

Figure 2 shows the sheet (1) placed on a frame (3) which has a number of orifices in which the pins (3.1) are placed, used to attach the sheet (1) to the frame (3).

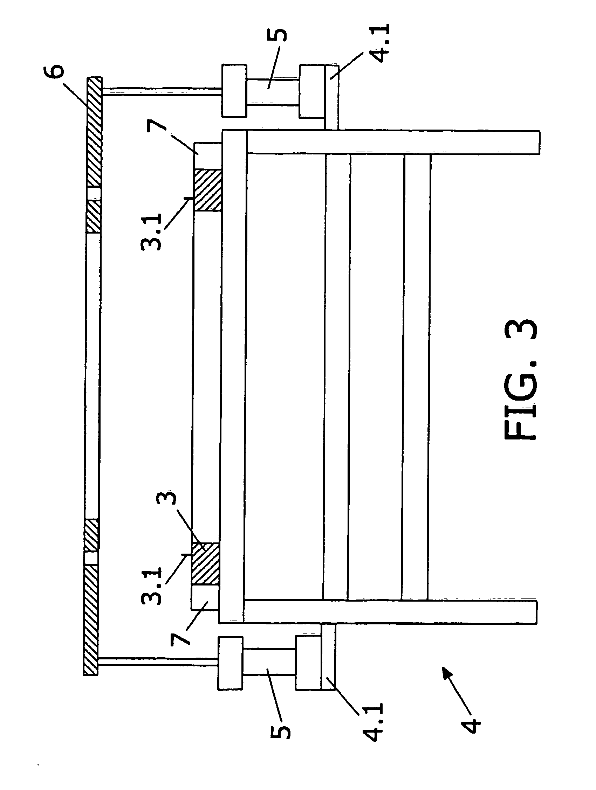

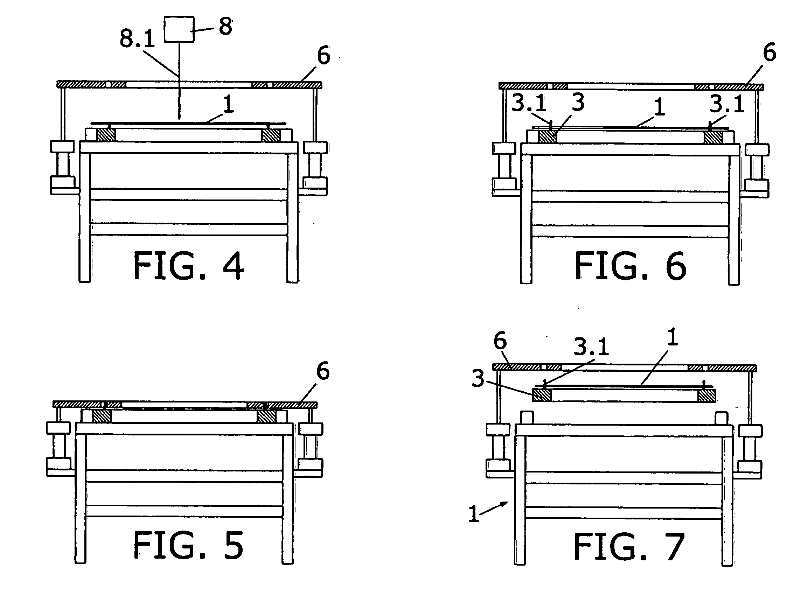

The main parts of the tool used to position, attach and secure the sheet correctly to the frame are shown in figures 3 and 4.

It can be seen that the tool used is a bench (4) provided with side platens (4.1) that act as anchoring supports for the cylinders (5), which drive a locking plate (6).

On the bench are stops (7) used to correctly position the frame (3). This frame (3) has pins (3.1) or any other attachment means that fulfill the described function.

Above the assembly is a light source (8) that emits a beam (8.1), for example a laser beam, illuminating the exposed face of the sheet. This beam (8.1) is used as a reference for aligning or positioning the reference element provided in the sheet. In this case a seam must be aligned.

After the sheet (1) has been correctly positioned on the frame (3), the locking lever (6) is actuated, descending so that the attachment pins (3.1) stick in the sheet (1), fixing its position with respect to the frame (3).

Figures 5, 6 and 7 respectively show the successive stages in which the locking plate (6) descends, rises and the assembly of the sheet (1) attached to the frame (3) is removed.

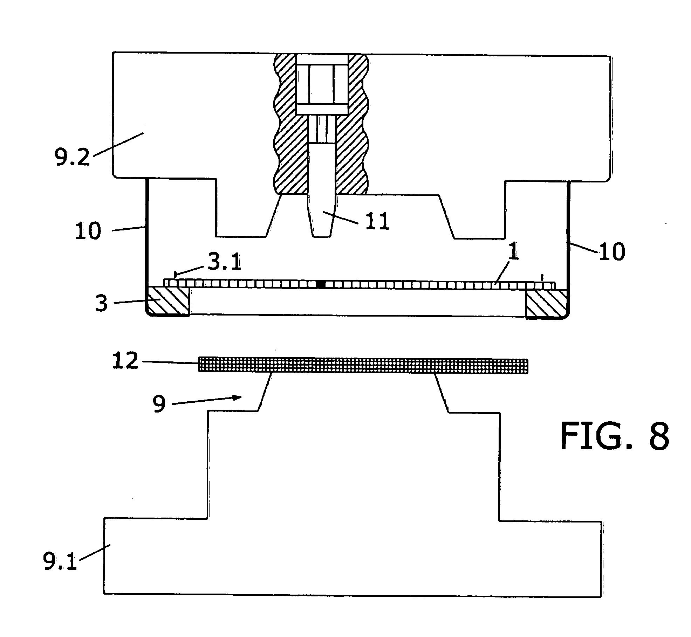

After this, as shown in figure 8, the frame (3) and sheet (1) are placed in the press (9), specifically on L-bars (10). These bars (10) provide a correct positioning of the frame with the locked sheet.

The press (9) has a lower platen (9.1) and an upper platen (9.2). Provided on the latter are hold-down means (11) that descends first, acting as a means for fixing the reference, in this case a seam.

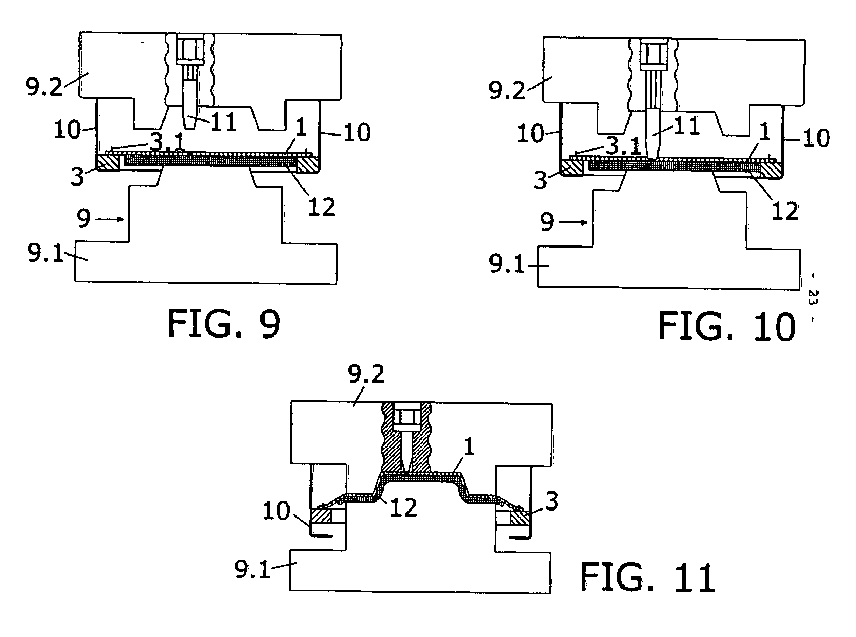

After attaching the sheet (1) on the substrate (12) placed on the lower platen (9.1) of the press (9), the upper platen (9.2) begins to descend, without the hold-down plate (11) changing its pressure on the sheet; the press closes and the piece is thermoformed, as shown in figure 11.

Described above is one embodiment in which the positioning and attachment means are on one platen of the press, their location not being a limitation, as it is possible to provide the same configuration of these means in the other platen of the press.

Finally, the press is opened and the hold-down plate (11) is opened, proceeding to remove the thermoformed piece.

The manufacturing method used, as previously mentioned, is by thermoforming, so that pressure and heat adheres the sheet to the substrate and the assembly adopts the geometry of the mould.

The forming method used in the press can also be injection.

As regards the procedure for manufacturing plastic pieces with a coating, it can be performed by either thermoforming or injection.

If the manufacturing procedure for plastic pieces uses thermoforming, it will comprise the following stages:
- a first stage of positioning and attaching the sheet on a frame, taking into account the exact position or alignment with a specific reference of the sheet with respect to the frame
- a second stage for positioning the assembly formed by the frame with the sheet attached to it, on means for positioning the frame disposed on a platen of the press
- placing plastic films on the platen faces
- closing the press until the sheet touches the aforementioned films
- securing a specific reference using hold-down means disposed on the platen with the frame supporting the sheet
- closing the press and maintaining the pressure of the hold-down means on the sheet
- removing the hold-down means
- opening the press
- removing the piece.

In the case that the plastic piece manufacturing method is performed by injection, it will comprise the following stages:
- a first stage of positioning and attaching the sheet on a frame, taking into account the exact position or alignment with a specific reference of the sheet with respect to the frame
- a second stage for positioning the assembly formed by the frame with the sheet attached to it, on means for positioning the frame disposed on a platen of the press
- closing the press until the sheet is next to both sides of the press
- securing a specific reference using hold-down means disposed on the platen with the frame supporting the sheet
- closing the press and maintaining the pressure of the hold-down means on the sheet, adhering the sheet to the substrate
- injecting plastic material to obtain the final forming
- cooling the injected plastic material
- removing the reference fixing or hold-down means
- opening the press
- removing the press

The first stage of positioning and securing the sheet on the frame of both manufacturing procedures in turn comprises the following stages:
- placing the sheet on the frame and the latter on guides of the bench provided for this purpose
- positioning the sheet on the frame according to a light beam emitted by a light source that indicates the correct position of the mark with respect to the frame
- attaching the sheet to the frame (in its correct position)
- descent of a locking plate
- securing the sheet on the frame by attachment means using the action of the locking plate
- removing the locking plate
- removing the assembly formed by the sheet and the frame attached on it; however, if the frame is positioned in the press it is not necessary to remove it.

The materials used for the sheet can be any whatsoever, particularly leather or imitation leather, the latter being of any plastic, specifically vinyl plastics being used.

The essence of the invention is not affected by variations of the materials, shape, size and arrangement of the components elements, described in a non-limiting manner so that an expert in the field should be able to reproduce it.

## Claims

1. Installation for manufacturing plastic pieces with a coating that allows positioning a coating or sheet on a substrate, wherein the sheet (1) has a reference that must be properly positioned or aligned on the substrate in a specific position or alignment, for which the following is used:
- means for positioning and attaching the sheet on a frame (3) and
- a press (9) having means for placing the assembly attached to the frame (3) and that allows obtaining the desired piece, in which the sheet (1) is attached to the substrate (12) with the reference correctly positioned and aligned with the substrate, for which purpose it is provided with means for attaching the sheet or coating placed on a platen of the press (9) to prevent the sheet or coating from moving during the manufacturing process of the piece,
**Characterized in that**
the means for positioning the sheet (1) on the frame (3) consist of a source of light (8) that emits a light beam (8.1) on the sheet (1).

2. Installation for manufacturing plastic pieces with a coating according to claim 1, **characterised in that** the means for attaching the sheet to the frame consist of a bench (1) with side platens (4.1) that act as an anchoring support for cylinders (5) that drive a locking plate (6); in addition, the bench has stops (7) that allow the correct positioning of the frame (3).

3. Installation for manufacturing plastic pieces with a coating according to claim 1, **characterised in that** the frame (3) includes pins (3.1) as the means used to attach the sheet to the frame.

4. Installation for manufacturing plastic pieces with a coating according to claim 1, **characterised in that** the light beam (8.1) emitted is a laser beam.

5. Installation for manufacturing plastic pieces with a coating according to claim 1, **characterised in that** the material used for the sheet is natural leather.

6. Installation for manufacturing plastic pieces with a coating according to claim 1, **characterised in that** the material used for the sheet is a plastic material.

7. Installation for manufacturing plastic pieces with a coating according to claim 1, **characterised in that** the material used for the sheet is a textile material.

8. Installation for manufacturing plastic pieces with a coating according to claim 2, **characterised in that** the actuation means of the cylinders (5) are hydraulic or pneumatic.

9. Installation for manufacturing plastic pieces with a coating according to claim 1, **characterised in that** the reference placed on the sheet is a seam (2).

10. Installation for manufacturing plastic pieces with a coating according to claim 1, **characterised in that** the means placed on the press (9) for a correct positioning of the assembly formed by the sheet (1) and the frame (3) on the press consist of L-bars (10) disposed on one of the platens (9.2) of the press.

11. Installation for manufacturing plastic pieces with a coating according to claim 1, **characterised in that** the attachment means disposed on one of the plates of the press (9) consist of a hold-down plate (11) that is placed on the reference provided in the sheet.

12. procedure for manufacturing plastic pieces with a coating by the previously claimed manufacturing system, which comprises the following stages:
- a first stage of positioning and attaching the sheet (1) on a frame (3), taking into account the exact position or alignment with a specific reference of the sheet (1) with respect to the frame (3) wherein the means for positioning the sheet on the frame consist of a source of light (8) that emits a light beam (8.1) on the sheet (1).
- a second stage for positioning the assembly formed by the the sheet (1) attached to it, on means for positioning the frame disposed on a platen of the press (9)
- securing a specific reference using hold-down means (11) disposed on the platen (9.2) holding the frame (3) that supports the sheet
- lowering the upper platen of the press (9) and maintaining the pressure of the hold-down means (11) on the sheet
- closing the press and forming the piece by applying heat and pressure, adhering the sheet (1) the substrate (12)
- opening the press
- removing the hold-down means (11)
- removing the piece.

13. Procedure for manufacturing plastic pieces with a coating by the previously claimed manufacturing system and according to claim 12, whereby case that the forming process in the press is by thermoforming and comprises the following stages:
- a first stage of positioning and attaching the sheet (1) on a frame (3), taking into account the exact position or alignment with a specific reference of the sheet with respect to the frame
- a second stage for positioning the assembly formed by the frame (3) with the sheet (1) attached to it, on means for positioning the frame disposed on a platen of the press
- placing substrates on the platen faces
- closing the press until the sheet touches the aforementioned substrates
- securing a specific reference using hold-down means (11) disposed on the platen holding the frame that supports the sheet
- closing the press (9) and maintaining the pressure applied by the hold-down means on the sheet
- removing the hold-down means (11)
- opening the press (9)
- removing the piece.

14. Procedure for manufacturing plastic pieces with a coating by the previously claimed manufacturing system and according to claim 12, whereby the forming process in the press is by injection and comprises the following stages:
- a first stage of positioning and attaching the sheet (1) on a frame (3), taking into account the exact position or alignment with a specific reference of the sheet with respect to the frame
- a second stage for positioning the assembly formed by the frame (3) with the sheet (1) attached to it, on means for positioning the frame disposed on a platen of the press
- closing the press (9) until the sheet (1) is next to both sides of the press
- securing a specific reference using hold-down means (11) disposed on the platen holding the frame that supports the sheet
- closing the press and maintaining the pressure applied by the hold-down means on the sheet, thereby adhering the sheet to the substrate
- injecting plastic material to obtain the final forming
- cooling the injected plastic material
- removing the attachment, reference, or hold-down means
- opening the press
- removing the piece.

15. Procedure for manufacturing plastic pieces with a coating by the previously claimed manufacturing system and according to claim 12, **characterised in that** the first stage of positioning and attaching the sheet to a frame comprises in turn the following stages:
- placing the sheet (1) on the frame (3) and the latter on guides of the bench provided for this purpose
- aligning the sheet reference according to a light beam (8.1) emitted by a light source (8)
- lowering a locking plate (6)
- securing the sheet to the frame by attachment means using the action of the locking plate (6)
- removing the locking plate (6)
- removing the assembly formed by the sheet (1) and the frame (3) attached to it.

## Patentansprüche

1. Einrichtung zur Herstellung von Kunststoffteilen mit einer Beschichtung, die es erlaubt, eine Beschichtung oder Schicht auf einem Substrat zu positionieren, wobei die Schicht (1) eine Referenz besitzt, die korrekt auf dem Substrat in einer spezifischen Position oder Ausrichtung positioniert oder ausgerichtet werden muss, für die Folgendes verwendet wird:
- Mittel zur Positionierung und Anbringung der Schicht auf einem Rahmen (3) und
- eine Presse (9), die über Mittel zur Platzierung der an dem Rahmen (3) befestigten Baugruppe verfügt und die die Erhaltung des gewünschten Teils ermöglicht, bei der die Schicht (1) an dem Substrat (12) mit der gegenüber dem Substrat korrekt positionierten und ausgerichteten Referenz befestigt wird, weswegen sie mit auf einer Platte der Presse (9) befestigten Mitteln zur Anbringung der Schicht oder Beschichtung ausgestattet ist, um die Schicht oder Beschichtung daran zu hindern, sich während des Herstellungsverfahrens des Teils zu bewegen,
**dadurch gekennzeichnet, dass** die Mittel zur Positionierung der Schicht (1) auf dem Rahmen (3) aus einer Lichtquelle (8) bestehen, die einen Lichtstrahl (8.1) auf die Schicht (1) abstrahlt.

2. Einrichtung zur Herstellung von Kunststoffteilen mit einer Beschichtung nach Anspruch 1, **dadurch gekennzeichnet, dass** die Mittel zur Anbringung der Schicht auf dem Rahmen aus einer Bank (1) mit Seitenplatten (4.1) bestehen, die als Verankerungsträger für Zylinder (5) dient, die eine Arretierplatte (6) antreiben; zusätzlich dazu besitzt die Bank Anschläge (7), die eine korrekte Positionierung des Rahmens (3) erlauben.

3. Einrichtung zur Herstellung von Kunststoffteilen mit einer Beschichtung nach Anspruch 1, **dadurch gekennzeichnet, dass** der Rahmen (3) Bolzen (3.1) als die Mittel einschließt, die zur Anbringung der Schicht auf dem Rahmen verwendet werden.

4. Einrichtung zur Herstellung von Kunststoffteilen mit einer Beschichtung nach Anspruch 1, **dadurch gekennzeichnet, dass** es sich bei dem ausgestrahlten Lichtstrahl (8.1) um einen Laserstrahl handelt.

5. Einrichtung zur Herstellung von Kunststoffteilen mit einer Beschichtung nach Anspruch 1, **dadurch gekennzeichnet, dass** es sich bei dem für die Schicht verwendeten Material um Naturleder handelt.

6. Einrichtung zur Herstellung von Kunststoffteilen mit einer Beschichtung nach Anspruch 1, **dadurch gekennzeichnet, dass** es sich bei dem für die Schicht verwendeten Material um ein Kunststoffmaterial handelt.

7. Einrichtung zur Herstellung von Kunststoffteilen mit einer Beschichtung nach Anspruch 1, **dadurch gekennzeichnet, dass** es sich bei dem für die Schicht verwendeten Material um ein Textilmaterial handelt.

8. Einrichtung zur Herstellung von Kunststoffteilen mit einer Beschichtung nach Anspruch 2, **dadurch gekennzeichnet, dass** die Antriebsmittel der Zylinder (5) hydraulisch oder pneumatisch sind.

9. Einrichtung zur Herstellung von Kunststoffteilen mit einer Beschichtung nach Anspruch 1, **dadurch gekennzeichnet, dass** es sich bei der auf der Schicht platzierten Referenz um eine Falz (2) handelt.

10. Einrichtung zur Herstellung von Kunststoffteilen mit einer Beschichtung nach Anspruch 1, **dadurch gekennzeichnet, dass** die für eine korrekte Positionierung der aus der Schicht (1) und dem Rahmen (3) auf der Presse gebildeten Baugruppe auf der Presse (9) platzierten Mittel aus L-Stangen (10) bestehen, die auf einer der Platten (9.2) der Presse angeordnet sind.

11. Einrichtung zur Herstellung von Kunststoffteilen mit einer Beschichtung nach Anspruch 1, **dadurch gekennzeichnet, dass** die auf einer der Platten der Presse (9) angeordneten Anbringungsmittel aus einer Halteplatte (11) bestehen, die auf der auf der Schicht vorgesehenen Referenz platziert ist.

12. Verfahren zur Herstellung von Kunststoffteilen mit einer Beschichtung mit dem oben beanspruchten Herstellungsverfahren, das die folgenden Arbeitsgänge umfasst:
- einen ersten Arbeitsgang zur Positionierung und Anbringung der Schicht (1) auf einem Rahmen (3) unter Berücksichtigung der exakten Position oder Ausrichtung mit einer spezifischen Referenz auf der Schicht (1) gegenüber dem Rahmen (3), wobei die Mittel zur Positionierung der Schicht aus einer Lichtquelle (8) bestehen, die einen Lichtstrahl (8.1) auf die Schicht (1) abstrahlt
- einen zweiten Arbeitsgang zur Positionierung der aus dem Rahmen (3) mit der darauf angebrachten Schicht (1) gebildeten Baugruppe auf Mitteln zur Positionierung des Rahmens, die auf einer Platte der Presse (9) angeordnet sind
- die Sicherung einer spezifischen Referenz unter Verwendung von Haltemitteln (11), die auf der Platte (9.2) angeordnet sind, die den Rahmen (3) halten, der die Schicht trägt
- die Senkung der oberen Platte der Presse (9) und die Beibehaltung des Drucks der Haltemittel (11) auf die Schicht
- die Schließung der Presse und Formung des Teils mittels der Aufbringung von Hitze und Druck, wobei die Schicht (1) auf das Substrat (12) geklebt wird
- die Öffnung der Presse
- die Entfernung der Haltemittel (11)
- die Entfernung des Teils.

13. Verfahren zur Herstellung von Kunststoffteilen mit einer Beschichtung mit dem oben beanspruchten Herstellungsverfahren und nach Anspruch 12, wonach der Formvorgang in der Presse mittels Thermoformung erfolgt und die folgenden Arbeitsgänge umfasst:
- einen ersten Arbeitsgang zur Positionierung und Anbringung der Schicht (1) auf einem Rahmen (3) unter Berücksichtigung der exakten Position oder Ausrichtung mit einer spezifischen Referenz auf der Schicht (1) gegenüber dem Rahmen (3)
- einen zweiten Arbeitsgang zur Positionierung der aus dem Rahmen (3) mit der darauf angebrachten Schicht (1) gebildeten Baugruppe auf Mitteln zur Positionierung des Rahmens, die auf einer Platte der Presse angeordnet sind
- die Platzierung von Substraten auf den Plattenseiten
- die Schließung der Presse, bis die Schicht die oben erwähnten Substrate berührt
- die Sicherung einer spezifischen Referenz unter Verwendung von Haltemitteln (11), die auf der Platte angeordnet sind, die den Rahmen halten, der die Schicht trägt
- die Schließung der Presse (9) und die Beibehaltung des seitens der Haltemittel auf die Schicht aufgebrachten Drucks
- die Entfernung der Haltemittel (11)
- die Öffnung der Presse (9)
- die Entfernung des Teils.

14. Verfahren zur Herstellung von Kunststoffteilen mit einer Beschichtung mit dem oben beanspruchten Herstellungsverfahren und nach Anspruch 12, wonach der Formvorgang in der Presse mittels Einspritzung erfolgt und die folgenden Arbeitsgänge umfasst:
- einen ersten Arbeitsgang zur Positionierung und Anbringung der Schicht (1) auf einem Rahmen (3) unter Berücksichtigung der exakten Position oder Ausrichtung mit einer spezifischen Referenz auf der Schicht gegenüber dem Rahmen
- einen zweiten Arbeitsgang zur Positionierung der aus dem Rahmen (3) mit der darauf angebrachten Schicht (1) gebildeten Baugruppe auf Mitteln zur Positionierung des Rahmens, die auf einer Platte der Presse angeordnet sind
- die Schließung der Presse (9), bis die Schicht (1) neben beiden Seiten der Presse ist
- die Sicherung einer spezifischen Referenz unter Verwendung von Haltemitteln (11), die auf der Platte angeordnet sind, die den Rahmen halten, der die Schicht trägt
- die Schließung der Presse und die Beibehaltung des seitens der Haltemittels auf die Schicht aufgebrachten Drucks, wodurch die Schicht auf das Substrat geklebt wird
- die Einspritzung von Kunststoffmaterial zum Erhalt der endgültigen Formung
- die Kühlung des eingespritzten Kunststoffmaterials
- die Entfernung der Anbringung, Referenz oder Haltemittel
- die Öffnung der Presse
- die Entfernung des Teils.

15. Verfahren zur Herstellung von Kunststoffteilen mit einer Beschichtung mit dem oben beanspruchten Herstellungsverfahren und nach Anspruch 12, **dadurch gekennzeichnet, dass** der erste Arbeitsgang der Positionierung und Anbringung der Schicht auf den Rahmen seinerseits folgende Arbeitsgänge umfasst:
- die Platzierung der Schicht (1) auf dem Rahmen (3) und des Letzteren auf Führungen der zu diesem Zweck zur Verfügung gestellten Bank
- die Ausrichtung der Schichtreferenz entsprechend einem Lichtstrahl (8.1), der von einer Lichtquelle (8) ausgestrahlt wird
- die Senkung einer Arretierplatte (6)
- die Sicherung der Schicht auf dem Rahmen mittels Anbringungsmitteln unter Verwendung der Einwirkung der Arretierplatte (6)
- die Entfernung der Arretierplatte (6)
- die Entfernung der aus der Schicht (1) und des daran angebrachten Rahmens (3) gebildeten Baugruppe.

## Revendications

1. Installation pour la fabrication de pièces en matière plastique revêtues qui permet de positionner un revêtement ou une feuille sur un substrat, où la feuille (1) possède une référence qui doit être correctement positionnée ou alignée sur le substrat dans une position ou un alignement spécifique, opération pour laquelle on utilise ce qui suit :
- un élément pour positionner et fixer la feuille sur un cadre (3) et
- une presse (9) possédant un élément pour placer l'assemblage fixé au cadre (3) et qui permet d'obtenir la pièce désirée, ou la feuille (1) est fixée au substrat (12) avec la référence correctement positionnée et alignée avec le substrat, à cette fin elle est pourvue d'un élément pour fixer la feuille ou le revêtement placé sur un plateau de la presse (9) pour empêcher la feuille ou le revêtement de bouger durant le procédé de fabrication de la pièce ;
**Caractérisée en ce que**
l'élément pour positionner la feuille (1) sur le cadre (3) consiste en une source de lumière (8) qui émet un faisceau lumineux (8.1) sur la feuille (1).

2. Installation pour la fabrication de pièces en matière plastique revêtues selon la revendication 1, **caractérisée en ce que** l'élément pour fixer la feuille au cadre consiste en un banc (1) avec des plateaux latéraux (4.1) qui opèrent comme un support d'ancrage pour des cylindres (5) qui commandent une plaque de blocage (6) ; en outre, le banc possède des butées (7) qui permettent le positionnement correct du cadre (3).

3. Installation pour la fabrication de pièces en matière plastique revêtues selon la revendication 1, **caractérisée en ce que** le cadre (3) comporte des goujons (3.1) qui sont les éléments utilisés pour fixer la feuille au cadre.

4. Installation pour la fabrication de pièces en matière plastique revêtues selon la revendication 1, **caractérisée en ce que** le faisceau lumineux (8.1) émis est un faisceau laser.

5. Installation pour la fabrication de pièces en matière plastique revêtues selon la revendication 1, **caractérisée en ce que** le matériau utilisé pour la feuille est du cuir naturel.

6. Installation pour la fabrication de pièces en matière plastique revêtues selon la revendication 1, **caractérisée en ce que** le matériau utilisé pour la feuille est une matière plastique.

7. Installation pour la fabrication de pièces en matière plastique revêtues selon la revendication 1, **caractérisée en ce que** le matériau utilisé pour la feuille est une matière textile.

8. Installation pour la fabrication de pièces en matière plastique revêtues selon la revendication 2, **caractérisée en ce que** les éléments d'actionnement des cylindres (5) sont hydrauliques ou pneumatiques.

9. Installation pour la fabrication de pièces en matière plastique revêtues selon la revendication 1, **caractérisée en ce que** la référence placée sur la feuille est une couture (2).

10. Installation pour la fabrication de pièces en matière plastique revêtues selon la revendication 1, **caractérisée en ce que** les éléments placés sur la presse (9) pour un positionnement correct de l'assemblage formé par la feuille (1) et le cadre (3) sur la presse consistent en des barres en L (10) disposées sur l'un des plateaux (9.2) de la presse.

11. Installation pour la fabrication de pièces en matière plastique revêtues selon la revendication 1, **caractérisée en ce que** les éléments de fixation disposés sur l'une des plaques de la presse (9) consistent en une plaque de retenue (11) qui est placée sur la référence présente sur la feuille.

12. Procédé pour la fabrication de pièces en matière plastique revêtues par le système de fabrication revendiqué précédemment, qui comprend les étapes suivantes :
- une première étape de positionnement et de fixation de la feuille (1) sur un cadre (3), prenant en compte la position ou l'alignement exact avec une référence spécifique de la feuille (1) par rapport au cadre (3) où les éléments de positionnement de la feuille sur le cadre consistent en une source de lumière (8) qui émet un faisceau lumineux (8.1) sur la feuille (1)
- une seconde étape pour positionner l'assemblage formé par le cadre (3) avec la feuille (1) fixée à celui-ci, sur des éléments de positionnement du cadre disposé sur un plateau de la presse (9)
- fixer une référence spécifique en utilisant un élément de retenue (11) disposé sur le plateau (9.2) retenant le cadre (3) qui supporte la feuille
- abaisser le plateau supérieur de la presse (9) et maintenir la pression de l'élément de retenue (11) sur la feuille
- fermer la presse et former la pièce par application de chaleur et de pression, en faisant adhérer la feuille (1) au substrat (12)
- ouvrir la presse
- retirer l'élément de retenue (11)
- retirer la pièce.

13. Procédé pour la fabrication de pièces en matière plastique revêtues par le système de fabrication revendiqué précédemment et selon la revendication 12, par lequel le procédé de formage dans la presse est un procédé par thermoformage et comprend les étapes suivantes :
- une première étape de positionnement et de fixation de la feuille (1) sur un cadre (3), prenant en compte la position ou l'alignement exact avec une référence spécifique de la feuille par rapport au cadre
- une seconde étape pour positionner l'assemblage formé par le cadre (3) avec la feuille (1) fixée à celui-ci, sur des éléments de positionnement du cadre disposé sur un plateau de la presse
- placer des substrats sur les faces du plateau
- fermer la presse jusqu'à ce que la feuille touche les substrats mentionnés ci-dessus
- fixer une référence spécifique en utilisant un élément de retenue (11) disposé sur le plateau retenant le cadre qui soutient la feuille
- fermer la presse (9) et maintenir la pression appliquée par l'élément de retenue sur la feuille
- retirer l'élément de retenue (11)
- ouvrir la presse (9)
- retirer la pièce.

14. Procédé pour la fabrication de pièces en matière plastique revêtues par le système de fabrication revendiqué précédemment et selon la revendication 12, par lequel le procédé de formage dans la presse est un procédé par injection et comprend les étapes suivantes :
- une première étape de positionnement et de fixation de la feuille (1) sur un cadre (3), prenant en compte la position ou l'alignement exact avec une référence spécifique de la feuille par rapport au cadre
- une seconde étape pour positionner l'assemblage formé par le cadre (3) avec la feuille (1) fixée à celui-ci, sur des éléments de positionnement du cadre disposé sur un plateau de la presse
- fermer la presse (9) jusqu'à ce que la feuille (1) soit proche des deux bords de la presse
- fixer une référence spécifique en utilisant un élément de retenue (11) disposé sur le plateau retenant le cadre qui soutient la feuille
- fermer la presse et maintenir la pression appliquée par l'élément de retenue sur la feuille, en faisant adhérer ainsi la feuille au substrat
- injecter la matière plastique pour obtenir le formage final
- refroidir la matière plastique injectée
- retirer la fixation, la référence, ou l'élément de retenue
- ouvrir la presse
- retirer la pièce.

15. Procédé pour la fabrication de pièces en matière plastique revêtues par le système de fabrication revendiqué précédemment et selon la revendication 12, **caractérisé en ce que** la première étape de positionnement et de fixation de la feuille à un cadre comprend à son tour les étapes suivantes :
- placer la feuille (1) sur le cadre (3) et ce dernier sur des guides du banc prévus à cet effet
- aligner la référence de la feuille selon un faisceau lumineux (8.1) émis par une source de lumière (8)
- abaisser une plaque de blocage (6)
- fixer la feuille au cadre par les éléments de fixation utilisant l'action de la plaque de blocage (6)
- retirer la plaque de blocage (6)
- retirer l'assemblage formé par la feuille (1) et le cadre (3) fixé à celle-ci.
